# EUROPÄISCHE PATENTANMELDUNG

(11) **EP 3 178 587 A1**
(43) Veröffentlichungstag der Anmeldung: **14.06.2017**
(21) Anmeldenummer: 16202499.6
(22) Anmeldetag: 06.12.2016
(51) Int. Cl.: B22F 1/00, B22F 3/00, B22F 3/10, B22F 3/11, C04B 35/63

(54) **VERFAHREN ZUM HERSTELLEN EINES PORÖSEN FORMKÖRPERS**

(30) Priorität: 08.12.2015 DE 102015224588
(71) Anmelder: Mahle International GmbH, 70376 Stuttgart (DE)
(72) Erfinder: RUCH, Roland, 79650 Schopfheim (DE); SCHOLL, Roland, 79725 Laufenburg (DE); SUTTER, Patrick, 79650 Schopfheim (DE); WINTRICH, Klaus, 79650 Schopfheim (DE)
(74) Vertreter: BRP Renaud & Partner mbB Rechtsanwälte Patentanwälte Steuerberater

(57) **Zusammenfassung**

Die Erfindung betrifft ein Verfahren zum Herstellen eines porösen Formkörpers. Das Verfahren umfasst die folgenden Schritte:
a) Bereitstellen einer Mischung aus einem Keramikpulver und/oder aus einem Metallpulver und/oder aus einem Legierungspulver sowie eines Harz-Aktivator-Gemisches,
b) Einbringen der Mischung mittels Kernschießen in eine Kavität, die in einem Formwerkzeug ausgebildet ist,
c) Verfestigen der Mischung in dem Formwerkzeug zu einem Formkörper,
d) Erwärmen oder Erhitzen des Formkörpers zum Entfernen im Formkörper vorhandener organischer Bestandteile und/oder im Formkörper vorhandener Gase,
e) Erneutes Verfestigen des Formkörpers mittels eines Sinterprozesses.

## Beschreibung

Die Erfindung betrifft ein Verfahren zum Herstellen eines porösen Formkörpers.

Bei der Neuentwicklung, aber auch beim Downsizing von Motoren steht neben der Erhöhung der Leistungskonzentration die Verlängerung der Lebensdauer der Motoren sowie die gleichzeitiger Reduzierung der Emissionen und damit des Kraftstoffverbrauches im Fokus der Bemühungen. Zum Erreichen dieser Aspekte werden häufig höhere Ansprüche an die einzelnen Motorenkomponenten hinsichtlich Haltbarkeit, Hochtemperaturbeständigkeit und Verschleißbeständigkeit gestellt als bisher. Ein Beispiel ist die Verringerung des Verschleißes an der Innenseite des Zylinders durch werkstofftechnische Maßnahmen, die die Reibung zwischen Kolbenringen und Zylinderlaufflächen reduzieren. Letztlich handelt es sich dabei um ein komplexes System tribologisch miteinander wechselwirkender Teilkomponenten wie etwa von Kolbenring-Zylinderwandung und Kolbenring-Zylinder.

Aus Gründen der Energieeffizienz sind bewegliche Massen in Brennkraftmaschinen zu minimieren, da sie einerseits durch die Notwendigkeit, ständig beschleunigt und abgebremst zu werden, einen Teil der Motorleistung aufbrauchen, wodurch sie negativ in die Energiebilanz des Motors eingehen, und andererseits mit ihrer Masse andere Komponenten, wie zum Beispiel Lagerungsteile höher beanspruchen. Vor diesem Hintergrund liegt es nahe, die Konstruktion der beweglichen Bauteile so zu entwickeln, dass sie eine minimale Masse aufweisen. Ein Weg, um dies zu erreichen, ist die Verwendung von Werkstoffen mit geringer Dichte, zum Beispiel Al-Legierungen. Von dieser Werkstoffgruppe ist jedoch bekannt, dass sie eine geringe Härte, eine hohe Wärmeleitfähigkeit, eine eingeschränkte Einsatztemperatur aufgrund ihres Schmelzverhaltens, eine relativ geringe Festigkeit und geringe Verschleißbeständigkeit im Kontakt mit anderen Werkstoffen, zum Beispiel Stählen, besitzen. Dennoch spielen Al-Legierungen eine bedeutende Rolle bei der Entwicklung und Umsetzung neuer Motorenkonzepte, und insbesondere auch als Werkstoff für Kolben von Verbrennungsmotoren.

Aufgrund zunehmender Leistungsdichten und harscherer Betriebsbedingungen (z.B. Verbrennungsdrücke im Zylinder) bei Verbrennungsmotoren ergeben sich kritische Betriebszustände, die sich in einem erhöhten Verschleiß und geringerer Lebensdauer einzelner Komponenten widerspiegeln. So muss sichergestellt werden, dass die Kolbennuten durch die erhöhten Belastungen nicht vorzeitig verschleißen, und so das "Abdichtverhalten" und damit den Gesamtwirkungsgrad des Motors verschlechtern.

Ein aus dem Stand der Technik bekanntes und bei Al-Kolben zur Verringerung des Verschleißes zwischen Kolbenring und Kolben angewandtes Verfahren ist das Eingießen von Gussringen aus Nickel-Resist-Gusseisenwerkstoffen. Das Eingießen ist jedoch nicht unproblematisch, da die Kolbenringträger vor dem Eingießen vorbehandelt werden müssen, um eine gute Anbindung an den Al-Kolben zu erreichen. Dennoch ist die Grenzfläche zwischen der Al-Legierung und dem Ni-Resist-Kolbenringträger im Einsatz kritisch, da ein schroffer Übergang vom Al-Werkstoff zum Gussbauteil erfolgt und Temperaturgradienten zu thermisch induzierten Spannungen führen, die eine Schädigung herbeiführen können. Zum anderen handelt es sich um Werkstoffe mit einer Dichte von ca. 7,4 g/cm³, durch die die Masse des Al-Kolbens bei denselben Konstruktionsmaßen erhöht wird.

Zur Verringerung der Bauteildichte ist es aus dem Stand der Technik bekannt, poröse Bauteile mit besonders geringer Bauteildichte herzustellen. Poröse Bauteile mit einer besonders hohen Porosität und mit folglich geringer Bauteildichte werden nach DE 202009004082 U1 im Rahmen der Herstellung von Wabenkörpern erzeugt. Dabei geht man von einem Metallschaum aus reinen Metallen - beispielsweise Eisen, Nickel, Chrom, Kupfer oder Aluminium - aus, die zu oxidations-und korrosionsbeständigen Legierungen verarbeitet werden. Die Details der Herstellung werden in DE 102004014076 B3 beschrieben. Metallschaumkörper mit offenporiger Struktur, werden aus einer offenporigen Struktur aus einem reinen Metall durch Aufbringen einer Pulverschicht und Sintern gebildet, wobei sich die Zusammensetzung des Werkstoffes so verändert, dass sie besondere Oxidations-und Korrosionseigenschaften erhält. Auf diese Art hergestellte poröse Bauteile erreichen eine Porosität von ca. 90 %.

In der DE 10 2012 020 829 A1 wird ein Verfahren zur Herstellung von gesinterten porösen Bauteilen beschrieben. Durch Verwendung eines Pulvergemischs aus einer sphärischen oder regulären Komponente und einer plättchen-förmigen Komponente ist es möglich, die Porosität in einem Bauteil gezielt einzustellen. Veränderte Mischungen führen zu unterschiedlichen Klopf- und Schüttdichten, die in gesinterten Produkten zu unterschiedlichen Porenarten und Porengehalten führen. Durch eine geeignete Kombination der mindestens zwei Komponenten lassen sich - unabhängig vom Werkstoff bzw. seiner Werkstoffdichte - Schüttdichten an Grünkörpern von 20 bis 70 %TD (TD: Verhältnis aus Bauteildichte und Dichte des Werkstoffes in %, entspricht der theoretischen Werkstoffdichte) erreichen. Im gesinterten Bauteil werden dadurch relative Dichten von 30 bis 80 % TD erreicht. Die Verarbeitung entsprechender Pulvermischungen kann durch bekannte pulver-technologische Verfahren, wie Pressen, Foliengießen, Spritzgießen, erfolgen.

In DE 10 2013 215 020 A1 wird ein infiltrierbares, das heißt ein offen poröses, Einlegeteil für gegossene Al-Kolben von Verbrennungskraftmaschinen beschrieben. Dabei geht man von einer Mischung von Eisenbasis-Pulvern aus, die besonders grobe Einzelpartikel enthält. Im Einzelnen wird eine Mischung beansprucht, in der höchstens 4 m.-% der Partikel einen mittleren Durchmesser von 75 µm haben. Weiterhin wird der Einsatz eines Binders als Beschichtung der Pulverpartikel, insbesondere mit einem Harz, offen gelegt, welche zu einer hinreichenden Grünfestigkeit der Formteile führen soll und das beim Sintern wieder ausbrennt. Ein erfindungsgemäß gefertigtes Einlegeteil soll nach dem Sintern eine Dichte von 2,5 bis 4,7 g/cm³ bzw. eine Porosität von 80 bis 50 Vol.-% bzw. ca. 32 % bis 60 % TD erreichen.

Es ist eine Aufgabe der vorliegenden Erfindung, bei der Entwicklung von Verfahren zur Herstellung poröser Formkörper neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, aus einer Mischung aus einem Metall-, Keramik- und/oder Legierungspulver und aus einem Harz-Aktivator-System mittels Kernschießens, also mittels eines fluiddynamischen Prozesses einen porösen Formkörper zu bilden. Durch geeignete Zusammensetzung der Mischung und geeignete Auswahl des Harz-Aktivator-Systems lässt sich das erfindungsgemäße Verfahren zur Herstellung von mediendurchlässigen Funktionsbauteilen verwenden, die an bestimmte Anwendungen angepasst werden können.

Beim hier vorgestellten, erfindungsgemäßen Verfahren zum Herstellen eines porösen Formkörpers wird in einem ersten Schritt a) ein Pulver aus einem Metall und/oder einer Metalllegierung und/oder einer Keramik mit einem Harz-Aktivator-Gemisch vermischt. Die sich ergebende Mischung muss sinterfähig sein. Das heißt, dass durch eine thermische Behandlung eine stoffschlüssige Verbindung zwischen benachbarten Partikeln erreicht wird. In einem zweiten Schritt b) wird die Mischung mittels Kernschießen in eine in einem Formwerkzeug ausgebildete Kavität eingebracht. In einem dritten Schritt c) wird die Mischung in dem Formwerkzeug durch die Wirkung einer reaktiven Substanz, z.B. einem Gas, zu einem Formkörper verfestigt. In einem vierten Schritt d) wird der Formkörpers zum Entfernen von im Formkörper vorhandener organischer Bestandteile und/oder im Formkörper vorhandener Gases erwärmt oder erhitzt. In einem fünften Schritt e) wird der Formkörper schließlich gesintert und auf diese Weise verfestigt.

Das voranstehend beschriebene Verfahren erlaubt die Herstellung von porösen Formkörpern mit nahezu beliebiger geometrischer Formgebung. Das Verfahren kann daher zur Herstellung von verschiedensten Bauteilen, die insbesondere im Fahrzeugbau Verwendung finden, benutzt werden. Denkbar ist beispielsweise die Herstellung von Zylinderlinern oder Bauteilen von Filtereinrichtungen. Aufgrund des gegenüber anderen Verfahren wie etwa dem Formpressen oder Spritzgießen relativ geringen, auf die Mischung bzw. den Formkörper wirkenden Fluiddrucks lassen sich Bauteile mit komplexer geometrischer Struktur sowie großen äußeren Abmessungen herstellen.

Ein weiterer Vorteil des erfindungsgemäßen Verfahrens besteht darin, dass in Schritt a) die Zusammensetzung des homogenen Gemisches nahezu beliebig variiert werden kann, ohne das Entmischungen der Pulver auftreten, die häufig zu Werkstoffveränderungen führen. So können etwa Metalle mit Legierungen und Keramiken gemischt werden. Weiterhin lässt sich bei Verwendung eines Pulvers aus Metall erreichen, dass beim Sintern in Schritt e) lediglich Verbindungen an den Kontaktoberflächen, jedoch keine Flächenverbindung erzeugt werden. Auf diese Weise kann ein Formkörper mit besonders hoher Porosität erzeugt werden.

Denkbar ist daher auch die Herstellung eines Formkörpers aus Partikeln mit einer speziellen Partikelmorphologie, welche ein Gemisch aus großen Plättchen und kleinen Kugeln besitzt. Dabei bewegen sich die kleinen Kugeln beim Sintern zu den Kontaktflächen der größeren Plättchen, wodurch zum einen - aufgrund der größeren Oberfläche der kleinen Kugeln - eine bessere Verbindung zwischen den Plättchen entsteht und zum andern ein größerer Hohlraum in dem Bereich gebildet wird, aus welchem die Kugeln quasi "wegwandern".

Denkbar ist es auch, in der homogenen Mischung eine zweite Komponente vorzusehen, welche beim Erwärmen/Erhitzen gemäß Schritt d) verdampft wird, so dass ein zusätzlicher Hohlraum also eine gezielte Porosität gebildet wird. Für eine solche zweite Komponente in Betracht kommen z.B. Paraffin-Teilchen oder Polyethylen-Partikel, die beim Erhitzen in die Gasphase übergehen.

Bei einer bevorzugten Ausführungsform weist das in Schritt a) bereitgestellte Harz-Aktivator-Gemisch zwischen 0,5 Gew.-% und 5 Gew.-% des Gesamtgewichts des Gemisches auf. Dies erlaubt es, die gewünschte Porosität über einen großen Bereich hinweg einzustellen, ohne dass damit eine unerwünschte Minderung in der Festigkeit des gebildeten Formkörpers einherginge.

Zweckmäßig erfolgt das Einbringen in Schritt b) fluiddynamisch unter Verwendung eines druckbeaufschlagten Gases.

Besonders zweckmäßig steht das druckbeaufschlagte Gas zum Einleiten der Mischung in das Formwerkzeug unter einem Gasdruck zwischen 10bar und 100 bar.

Besonders bevorzugt ist das druckbeaufschlagte Gas Druckluft oder Stickstoff oder Argon oder umfasst Druckluft und/oder Stickstoff und/oder Argon. Mittels einer solchen "Fluidisierung" kann ein Formkörper mit der gewünschten hohen Porosität erzeugt werden.

Bevorzugt erfolgt das Verfestigen in Schritt c) durch Einleiten wenigstens eines Reaktionsgases in das Formwerkzeug. Mittels des Reaktionsgases wird eine chemische Reaktion ausgelöst, die dazu führt, dass das Pulver in der Kavität mit dem Harz des Harz-Aktivators eine Bindung eingeht. In einer Variante kann das Verfestigen auch durch Belassen des Formkörpers im Formwerkzeug - also ohne Einleitung eines Reaktionsgases - für einen vorbestimmten Zeitraum erfolgen. Bei dieser Variante erfolgt aber die Ausbildung besagter Bindung langsamer als bei der Variante mit Reaktionsgas.

Besonders bevorzugt kann das Reaktionsgas Amid umfassen oder Amid sein. Experimentelle Untersuchungen haben gezeigt, dass zwischen dem Pulver und dem Harz-Aktivator-Gemisch bei Verwendung von Amid als Reaktionsgas eine besonders gute Verbindung erzeugt werden kann.

Besonders bevorzugt wird der Formkörper in Schritt d) auf eine Temperatur zwischen 25°C und 700°C erwärmt/erhitzt. Durch ein Erwärmen/Erhitzen des Formkörpers auf eine Temperatur innerhalb des genannten Temperatur-Intervalls werden besagte organische Bestandteile bzw. Gase besonders wirksam entfernt

Bei einer weiteren bevorzugten Ausführungsform erfolgt das Erwärmen/Erhitzen in einer neutralen, oxidierenden oder reduzierenden Atmosphäre. Auf diese Weise können unerwünschte chemische Reaktionen am Formkörper während des Ausgasens vermieden werden.

Bei einer weiteren bevorzugten Ausführungsform erfolgt der Sinterprozess in Schritt e) in einer reduzierenden, aufkohlenden oder neutralen Atmosphäre. Auf diese Weise kann eine Biegebruchfestigkeit des Formkörpers zwischen 5 MPa und 1000 MPa erreicht werden, wobei der Formkörper eine Gesamtporosität zwischen 20% und 80% aufweist.

Bei einer weiteren vorteilhaften Weiterbildung wird während des Verfestigens in Schritt c) oder nach dem Verfestigen gemäß Schritt c) kein mechanischer Druck auf den sich bildenden Formkörper ausgeübt. Auf diese Weise kann eine hohe Porosität des Formkörpers sichergestellt werden.

Die Erfindung betrifft weiterhin einen porösen Formkörper, der mittels des voranstehend erläuterten Verfahrens hergestellt ist.

Bei einer bevorzugten Ausführungsform ist der Formkörper als Komponente einer Filtereinrichtung oder als Zylinderliner ausgebildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Bevorzugte Ausführungsbeispiele der Erfindung werden in der nachfolgenden Beschreibung näher erläutert.

Im Folgenden wird das erfindungsgemäße Verfahren anhand eines ersten Beispiels diskutiert. In Schritt a) wird ein metallisches Ausgangspulver ausgewählt, das insbesondere die gewünschten funktionellen Eigenschaften am Endprodukt, wie zum Beispiel Porengröße und mechanische Festigkeit, ermöglicht.
Die beiden Metallpulvermischungen PROBE A und PROBE B gemäß Tabelle AB1.1 erfüllen diese Kriterien.

**Tab AB1.1 Zusammensetzung der Metallmischung [AB1]**

| | Eisenpulver [AB5] (150 - 425 µm) | Kupfer-Pulver: (45-250 µm) | Graphit: |
|---|---|---|---|
| PROBE A | Rest | 3 wt-% | 0 wt-% |
| PROBE B | Rest | 3 wt-% | 0,65 wt-% |

Die beiden Metallpulvermischungen gem. Tab. AB1.1 werden nun in Schritt a) jeweils mit einem Harz-Aktivator-Gemisch vermischt. Anschließend werden die Mischungen jeweils mit unterschiedlichen Schießdrücken - z.B. 4, 6, 8 und 10 bar-gemäß Schritt b) mittels Kernschießens in eine Kavität mit äußeren Abmessungen, z.B.180 x 24 x 24 mm³ geschossen und danach in einem Schritt c) unter Wirkung eines Reaktionsgases, im Beispielszenario des Reaktionsgases "DMPA 706", für 10 Sekunden ausgehärtet.

Die sich ergebenden Formkörper besitzen eine Dichte von 3,5 g/cm3 und eine 3-Punkt-Biegebruchfestigkeit von 1,4 MPa (PROBE A) bzw. 1,9 MPa (PROBE B). Höhere Drücke können zu Formfehlern am Formkörper führen, geringe Gehalte an Harz-Aktivator verringern die Biegebruchfestigkeit und Kantenfestigkeit. Höhere Gehalte an Harz bzw. Aktivator verschlechtern die Entformbarkeit des Formkörpers.

In einem thermischen Prozess, der sogenannten Vorsinterung, wird gemäß Schritt d) durch Erhitzen des Formkörpers mit einer Geschwindigkeit von 2K/min auf 700 °C in einer N₂-H₂-Atmosphäre das Harz aus dem Formkörper entfernt. Eine Verfestigung - gemessen als Biegebruchfestigkeit - erfolgt in Schritt e) durch Aufheizen von 700 °C mit 5 K/min auf die Sintertemperatur Tₛᵢₙₜₑᵣ unter der N₂-H₂-Atmosphäre. Für PROBE A nimmt die Biegebruchfestigkeit nur leicht zu (siehe Tab. AB1.3). Die graphithaltige Pulvermischung (PROBE B) erreicht eine deutlich höhere Festigkeit mit einem Höchstwert von ca. 9 MPa.

Tab. AB1.3 zeigt die Ergebnisse der Sinterung.

**Tab. AB1.3.: 3-Punkt-Biegebruchfestigkeit in [MPa] von Proben, die bei unterschiedlichen Temperaturen gesintert wurden**

| Tₛᵢₙₜₑᵣ | 4.1 (PROBE A) | 4.2 (PROBE B) |
|---|---|---|
| 1115 | 4,7 | 7,4 |
| 1120 | 4,7 | 6,99 |
| 1135 | 4,6 | 7,98 |
| 1145 | 4,5 | 8,6 |
| 1175 | 4,9 | 9,02 |

Die Verarbeitbarkeit der schießfertigen Pulvermischungen ist zeitlich begrenzt, wenn Druckluft als Übertragungsmedium verwendet wird. Dies lässt sich anhand der mit der Verarbeitungsdauer abnehmenden Biegebruchfestigkeit der "grünen" Teile belegen. Setzt man Stickstoff als Prozessgas ein, verlängert sich die Dauer für die Verarbeitung.

Im Folgenden wird das erfindungsgemäße Verfahren anhand eines weiteren, zweiten Beispiels diskutiert. Zur Herstellung eines für Filteranwendungen geeigneten metallischen Bauteils, bestehend aus einer tragenden grobporösen Struktur und einem feinporösen Filtermedium, wird analog zum vorangehend erläuterten ersten Ausführungsbeispiel vorgegangen . Im Unterschied zum ersten Beispiel wird beim zweiten Beispiel ein metallisches Filtergewebe - etwa mit einer Dicke von ca. 0,2 mm und mit einer Porengröße/Maschenweite von 35 µm - vor dem Kernschießen gemäß Schritt b), insbesondere eben, in die Kavität des Werkzeuges eingelegt.

Danach werden die im ersten Ausführungsbeispiel beschriebenen Verfahrensschritte ausgeführt, es werden also die Schritte "Füllen, Kernschießen, Entbinden und Sintern" durchgeführt. Im Ergebnis kann ein ebenes metallisches Fein-Filterbauteil hergestellt werden, das von einer grobporösen Struktur - Porengröße: ca. 200 µm - getragen wird und durch die "angesinterte" Membran FeinFiltereigenschaften erhält. Wahlweise können auch Filtergewebe mit anderen Maschenweiten verwendet werden.

Im Folgenden wird das erfindungsgemäße Verfahren anhand eines dritten Beispiels diskutiert. In Analogie zum zweiten Ausführungsbeispiel besteht auch die Möglichkeit, ein "grünes" Halbzeug zum Einlegen in die Kavität zu verwenden. Es handelt sich dabei um ein Metall-Keramik-Pulver-Schichtsystem, welches eine grobe metallische Pulver-Schicht von ca. 200 µm Schichtdicke und eine ca. 30 µm dicke Keramik-Pulver-Schicht enthält. Die Pulver sind in eine organische Matrix eingebettet. Im Unterschied zum ersten und zweiten Ausführungsbeispiel wird die durch Kernschießen aufzubringende Pulvermischung so ausgewählt, dass während der thermischen Behandlung eine signifikante Schwindung erfolgt. Diese wird so eingestellt, dass sie sehr gut an das Schwindungsverhalten des grünen Halbzeuges angepasst ist, und liefert nach dem Sintern eine vorbestimmte, anwendungsgerechte Porosität. Ein derartiges Bauteil eignet sich für die Filtration von Partikeln von ca. 10 nm bis 20 µm. Die entsprechende Porengröße wird über die Auswahl der keramischen Pulver in der Deckschicht und die Sinterbedingungen eingestellt.

Im Folgenden wird das erfindungsgemäße Verfahren anhand eines vierten Beispiels diskutiert. Für robuste technische Anwendungen, bei denen eine bruch-empfindliche keramische Deckschicht zum Filtrieren wie im voranstehend beschriebenen dritten Ausführungsbeispiel nicht in Frage kommt, ist es auch möglich, diese durch leicht reduzierbare Oxid-Partikel zu ersetzen. Dadurch entsteht nach dem Reduzieren dieser Oxid-Partikel und Sintern des gesamten Formkörpers eine feinporöse schadenstolerante metallische Deckschicht auf einer robusten Trägerstruktur bei einstellbarer Porosität.

Im Folgenden wird das erfindungsgemäße Verfahren anhand eines fünften Beispiels diskutiert:
In Anlehnung an das erste Beispiel ist es denkbar, anstelle von konventionell hergestelltem Eisen- oder Kupferpulver ein oder mehrere Granulate (10 bis 500 µm) aus Ausgangstoffen zu verwenden, die durch bekannte technologische Verfahren - zu nennen sind etwa dem Fachmann bekannte Verfahren wie Sprühtrocknung, Wirbelschichtgranulation, Pelletieren, Mischgranulation - aus feinen handelsüblichen keramischen oder metallischen Ausgangsstoffen (0,01 bis ca. 25 µm) gebildet wurden. Durch diese Vorgehensweise werden Formkörper erreicht, die lokal, also in den Granulaten, beim Sintern eine hohe Dichte erreichen und die in den Zwickeln, also in den durch die Berührungspunkte der Granulat-Körner gebildeten Porenvolumina, eine hohe, und über die Granulat-Größe einstellbare Porosität ermöglichen.

Ein weiterer Unterschied besteht darin, dass derartige Formkörper bei gleicher Sintertemperatur eine höhere Festigkeit nach dem Sintern erreichen. Dies beruht auf der Verwendung besonders sinteraktiver, feiner, Ausgangspulver für die Granulate, und sorgt dafür, dass Granulat-Körner untereinander in Berührungszonen stabilere Kontakte ausbilden als konventionelle Ausgangspulver wie etwa im ersten Beispiel, bei denen die Erhöhung der Sintertemperatur nur eine geringe Steigerung der Festigkeit bewirkt.

Unter metallischen Ausgangspulvern werden vorliegend nicht nur Pulver aus reinen Metallen verstanden, sondern auch solche, die aus verschiedenen Metallen, Halbmetallen (also halbleitende Metalle) oder Metalloiden gebildet sind, nämlich Legierungen, intermetallische Verbindungen, Mischkristalle oder nanokristalline bzw. amorphe Werkstoffzustände.

## Patentansprüche

1. Verfahren zum Herstellen eines porösen Formkörpers, umfassend die folgenden Schritte:
a) Bereitstellen einer Mischung aus einem Pulver aus einem Metall und/oder einer Metalllegierung und/oder einer Keramik mit einem Harz-Aktivator-Gemisch,
b) Einbringen der Mischung mittels Kernschießen in eine Kavität, die in einem Formwerkzeug ausgebildet ist,
c) Verfestigen der Mischung in dem Formwerkzeug zu einem Formkörper,
d) Erwärmen oder Erhitzen des Formkörpers zum Entfernen im Formkörper vorhandener organischer Bestandteile und/oder im Formkörper vorhandener Gase,
e) Erneutes Verfestigen des Formkörpers mittels eines Sinterprozesses.

2. Verfahren nach Anspruch 1,
**dadurch gekennzeichnet, dass**
das in Schritt a) bereitgestellte Harz-Aktivator-Gemisch zwischen 0,5 Gew.-% und 5 Gew.-% des Gesamtgewichts Gemisches aufweist.

3. Verfahren nach Anspruch 1 oder 2,
**dadurch gekennzeichnet, dass**
das Einbringen in Schritt b) fluiddynamisch unter Verwendung eines druckbeaufschlagten Gases erfolgt.

4. Verfahren nach einem der Ansprüche 1 bis 3,
**dadurch gekennzeichnet, dass**
das druckbeaufschlagte Gas Druckluft oder Stickstoff oder Argon ist oder umfasst.

5. Verfahren nach einem der vorhergehenden Ansprüche,
**dadurch gekennzeichnet, dass**
das Verfestigen in Schritt c) durch Einleiten wenigstens eines Reaktionsgases in das Formwerkzeug erfolgt.

6. Verfahren nach einem der vorhergehenden Ansprüche,
**dadurch gekennzeichnet, dass**
das Reaktionsgas Amid umfasst oder ist.

7. Verfahren nach einem der vorhergehenden Ansprüche,
**dadurch gekennzeichnet, dass**
der Formkörper in Schritt d) auf eine Temperatur zwischen 25°C und 700°C erwärmt/erhitzt wird.

8. Verfahren nach einem der vorhergehenden Ansprüche,
**dadurch gekennzeichnet, dass**
das Erwärmen/Erhitzen in einer neutralen, oxidierenden oder reduzierenden Atmosphäre erfolgt.

9. Verfahren nach einem der vorhergehenden Ansprüche,
**dadurch gekennzeichnet, dass**
der Sinterprozess in Schritt e) in einer reduzierenden, aufkohlenden oder neutralen Atmosphäre erfolgt.

10. Verfahren nach einem der vorhergehenden Ansprüche,
**dadurch gekennzeichnet, dass**
während des Verfestigens in Schritt c) oder nach dem Verfestigen gemäß Schritt c) kein mechanischer Druck auf den sich bildenden Formkörper ausgeübt wird.

11. Poröser Formkörper, hergestellt mittels des Verfahrens nach einem der vorhergehenden Ansprüche.

12. Poröser Formkörper nach Anspruch 11,
**dadurch gekennzeichnet, dass**
der Formkörper als Komponente einer Filtereinrichtung oder als Zylinderliner ausgebildet ist.
